# FASCICULE DE BREVET EUROPEEN

(11) **EP 3 713 773 B1**
(45) Date de publication et mention de la délivrance du brevet: **23.03.2022**
(21) Numéro de dépôt: 18826765.2
(22) Date de dépôt: 20.11.2018
(51) Int. Cl.: B60C 1/00, C08L 9/06

(54) **COMPOSITION DE CAOUTCHOUC**
KAUTSCHUKZUSAMMENSETZUNG
RUBBER COMPOSITION

(30) Priorité: 21.11.2017 FR 1760960
(43) Date de publication de la demande: 30.09.2020
(73) Titulaire: Compagnie Générale des Etablissements Michelin, 63000 Clermont-Ferrand (FR)
(72) Inventeur: SALIT, Anne-Frédérique, 63040 Clermont-Ferrand Cedex 9 (FR); SCHNELL, Benoît, 63040 Clermont-Ferrand Cedex 9 (FR); GANDER, Sophie, 63040 Clermont-Ferrand Cedex 9 (FR); IVANOV, Sergey, 63040 Clermont-Ferrand Cedex 9 (FR); FLEURY, Etienne, 63040 Clermont-Ferrand Cedex 9 (FR)
(74) Mandataire: Gandon-Pain, Sylvie
(86) Numéro de dépôt international: PCT/FR2018/052917
(87) Numéro de publication internationale: WO 2019/102132

(56) Documents cités:
- WO-A1-2017/009150
- US-A1- 2012 046 418
- US-A1- 2013 123 418

## Description

Le domaine de la présente invention est celui des compositions de caoutchouc diénique renforcées et utilisables notamment dans le pneumatique pour véhicules, plus précisément dans la fabrication de produits semi-finis pour pneumatique.

On utilise traditionnellement une charge renforçante dans une composition de caoutchouc pour améliorer les propriétés de renforcement de la composition de caoutchouc et donc sa résistance à l'usure. Pour utiliser au mieux le pouvoir renforçant d'une charge renforçante dans une composition de caoutchouc, on cherche à disperser au mieux la charge renforçante dans la composition de caoutchouc. Or une composition de caoutchouc renforcée d'une silice ou d'un noir de carbone voit sa rigidité à cuit diminuer lorsque la dispersion de la silice ou du noir de carbone est améliorée. La diminution de la rigidité à cuit de la composition de caoutchouc se traduit au niveau de la performance d'un pneumatique par une modification de son comportement routier, notamment une moindre performance. Un niveau déjà bas de la rigidité à cuit d'une composition de caoutchouc impose au formulateur de compositions de caoutchouc de limiter la quantité de plastifiant qui peut être ajoutée dans la composition de caoutchouc; le cas extrême étant de ne pas pouvoir en ajouter. Or l'ajout de plastifiant dans une composition de caoutchouc est un levier important de formulation. En jouant sur le taux de plastifiant et sur sa nature, le formulateur peut accéder à partir d'une même composition de base à un très grand nombre de compositions qui confèrent au pneumatique des performances différentes, et ceci par une opération simple qu'est l'ajout de plastifiant. La limitation de l'usage de plastifiant imposée par le bas niveau de rigidité à cuit de la composition de caoutchouc réduit cette possibilité.

Il est donc une préoccupation constante d'améliorer la dispersion d'une silice ou d'un noir de carbone dans une composition de caoutchouc tout en recherchant un bon compromis des propriétés de la composition de caoutchouc qui sont la rigidité à cuit, l'hystérèse et le renforcement de la composition de caoutchouc. La Demanderesse a découvert qu'une composition de caoutchouc renforcée d'une silice ou d'un noir de carbone et comprenant un composé 1,3-dipolaire portant un groupe époxyde permet de répondre à cette préoccupation.

Un premier objet de l'invention est une composition de caoutchouc à base d'au moins un élastomère diénique, un composé 1,3-dipolaire comportant un groupe époxyde, une charge renforçante comprenant une silice ou un noir de carbone et un système de vulcanisation.

Un objet de l'invention est aussi un procédé pour préparer la composition de caoutchouc conforme à l'invention.

Un autre objet de l'invention est un pneumatique qui comprend une composition de caoutchouc conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont aussi concernés les élastomères, les plastifiants, les charges....

Par élastomère diénique, doit être compris un élastomère comprenant des unités monomères diéniques, en particulier des unités de monomères 1,3-diènes. On entend par unité monomère diénique toute unité qui résulte de l'insertion d'un diène dans une chaîne polymère et qui contient une double liaison carbone carbone.

Le terme composé 1,3-dipolaire est compris selon la définition donnée par IUPAC. Par définition, il contient un dipôle.

Dans la présente demande, on entend par groupe carboné un groupe qui contient un ou plusieurs atomes de carbone.

De manière connue, un groupe époxyde est un cycle éther à 3 membres dont 2 membres sont deux atomes de carbone et le troisième membre est un atome d'oxygène. Le groupe époxyde dans le composé 1,3-dipolaire utile aux besoins de l'invention est un cycle éther à 3 membres dont un premier membre est un atome de carbone présentant un rattachement au dipôle du composé 1,3-dipolaire. Typiquement, le groupe époxyde est de formule (I).

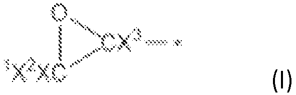

Dans la formule (I), le symbole ^{∗} représente un rattachement au dipôle ; les symboles X¹, X² et X³, représentent un atome ou un groupe d'atomes. Ils peuvent être identiques ou différents. Ils peuvent être, indépendamment les uns des autres, un atome d'hydrogène ou un groupe substituant. De préférence, le groupe substituant est un groupe carboné, en particulier hydrocarboné. Le groupe substituant peut être aliphatique ou aromatique, linéaire, ramifié ou cyclique. Comme groupe substituant conviennent particulièrement les alkyles et les aryles, plus particulièrement les alkyles ayant 1 à 6 atomes de carbone, de préférence méthyle, ou les aryles ayant 6 à 12 atomes de carbone, de préférence phényle.

Selon un mode de réalisation plus préférentiel de l'invention, X¹, X² et X³ représentent chacun un atome d'hydrogène.

De préférence, le dipôle du composé 1,3-dipolaire est un oxyde de nitrile, auquel cas le dipôle du composé 1,3-dipolaire est un oxyde de nitrile -C≡N→O.

Selon un mode de réalisation de l'invention, le composé 1,3-dipolaire comprend un noyau benzénique substitué par le dipôle et de préférence aussi substitué en ortho du dipôle. Très avantageusement, le composé 1,3 dipolaire est un oxyde de nitrile aromatique, c'est-à-dire un composé aromatique substitué par un dipôle oxyde de nitrile. Mieux, le composé 1,3-dipolaire est un monooxyde de nitrile aromatique, ce qui correspond à un composé qui contient un seul dipôle oxyde de nitrile et qui est un composé aromatique substitué par le dipôle oxyde de nitrile.

Selon un mode de réalisation très particulier de l'invention, le composé 1,3-dipolaire contient un motif de formule (II) dans laquelle quatre des cinq symboles R1 à R5, identiques ou différents, sont chacun un atome ou un groupe d'atomes, et le cinquième symbole représente une chaîne carbonée permettant le rattachement au groupe époxyde, sachant qu'au moins un des R1 et R5 est différent d'un atome d'hydrogène.

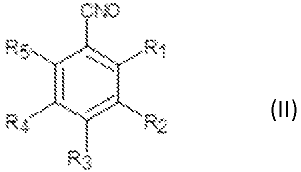

On entend par groupe d'atomes un enchaînement d'atomes liés de façon covalente pour former une chaîne. Deux groupes Ri et Ri+1, pour i nombre entier allant 1 à 4, peuvent former ensemble avec les atomes de carbone du noyau benzénique auxquels ils se rattachent, un cycle.

Selon une variante, R1, R3 et R5 représentent chacun un groupe hydrocarboné. De manière plus préférentielle R1, R3 et R5 représentent chacun un alkyle, de manière encore plus préférentielle un méthyle ou un éthyle.

Selon une autre variante, R4 et R5 forment un cycle aromatique avec les atomes de carbone du noyau benzénique auxquels ils se rattachent.

La chaine carbonée représentée par le cinquième symbole peut être aliphatique ou aromatique, linéaire, ramifiée ou cyclique, de préférence saturée. Le cinquième symbole représente préférentiellement une chaîne carbonée interrompue par un ou plusieurs hétéroatomes, de préférence oxygène. On entend par chaîne carbonée une chaîne qui comprend un ou plusieurs atomes de carbone. La chaîne carbonée peut être une chaîne hydrocarbonée. La chaîne carbonée peut comprendre une ou plusieurs fonctions éther, en particulier le cinquième symbole comprend un motif -CH₂O-, le groupe méthylène étant attaché au groupe époxyde.

Selon l'un quelconque des modes de réalisation de l'invention, le composé 1,3-dipolaire est très avantageusement un composé de formule (III) ou (IV).

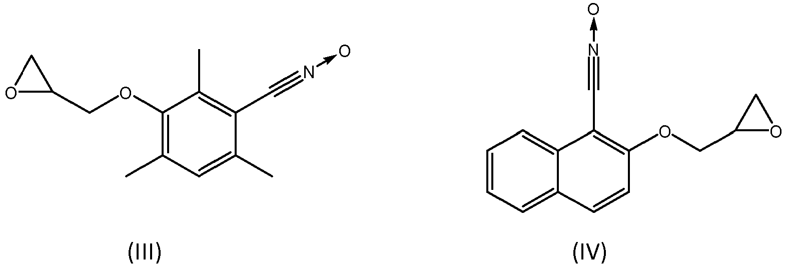

Le taux de composé 1,3-dipolaire peut varier dans une large mesure selon l'application envisagée de la composition de caoutchouc. Selon l'un quelconque des modes de réalisation de l'invention, le composé 1,3-dipolaire est préférentiellement introduit dans la composition de caoutchouc à un taux allant de 0,01 à 5% molaire, plus préférentiellement de 0,01 à 1% molaire, encore plus préférentiellement de 0,1 à 1% molaire. Ce taux exprimé en pourcentage molaire, équivaut au nombre de moles de composé 1,3-dipolaire pour 100 moles d'unités monomères diéniques du polymère diénique utile aux besoins de l'invention.

L'élastomère diénique utile aux besoins de l'invention peut être :
(a) - tout homopolymère d'un monomère diène conjugué, notamment tout homopolymère obtenu par polymérisation d'un monomère diène conjugué ayant de 4 à 12 atomes de carbone ;
(b) - tout copolymère obtenu par copolymérisation d'un ou plusieurs diènes conjugués entre eux ou avec un ou plusieurs composés vinyle aromatique ayant de 8 à 20 atomes de carbone ;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère ;
(e) - tout copolymère obtenu par copolymérisation d'un ou plusieurs diènes conjugués avec l'éthylène, une α-monooléfine aliphatique acyclique ayant 3 à 18 atomes de carbone ou leur mélange comme par exemple ceux décrits dans le document WO 2005028526, WO 2004035639 et WO 2007054224.

De préférence, l'élastomère diénique est choisi dans le groupe des élastomères constitué par les homopolymères de 1,3-butadiène, les homopolymères d'isoprène, les copolymères de 1,3-butadiène, les copolymères d'isoprène et leurs mélanges.

La charge renforçante comprend un noir de carbone ou une silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Selon un mode réalisation de l'invention, le noir de carbone représente plus de 50% en masse de la masse de la charge renforçante de la composition de caoutchouc. On dit alors que le noir de carbone est la charge renforçante majoritaire.

Selon un autre mode réalisation de l'invention, la silice représente plus de 50% en masse de la masse de la charge renforçante de la composition de caoutchouc. On dit alors que la silice est la charge renforçante majoritaire. Lorsque le noir de carbone est combiné à une silice qui est la charge renforçante majoritaire, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la silice.

De manière préférentielle, le taux de charge renforçante totale est compris entre 30 et 160 pce, plus préférentiellement entre 40 pce et 160 pce. En deçà de 30 pce, le renforcement de la composition de caoutchouc est insuffisant pour apporter un niveau de cohésion ou de résistance à l'usure adéquats du composant caoutchouteux du pneumatique comprenant cette composition. De manière encore plus préférentielle, le taux de charge renforçante totale est d'au moins 50 pce. Au-delà de 160 pce, il existe un risque d'augmentation de l'hystérèse et donc de la résistance au roulement des pneumatiques. Pour cette raison, le taux de charge renforçante totale est de préférence dans un domaine allant de 50 à 120 pce, notamment pour un usage dans une bande de roulement de pneumatique. L'une quelconque de ces plages de taux de charge renforçante totale peut s'appliquer à l'un quelconque des modes de réalisation de l'invention.

Pour coupler la silice à l'élastomère diénique, on utilise de manière bien connue un agent de couplage, notamment un silane, (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels. Plus particulièrement, on utilise des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650). A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de silice. Son taux est préférentiellement compris entre 0,5 et 12 pce, plus préférentiellement compris dans un domaine allant de 3 à 10 pce. Ce taux est aisément ajusté par l'homme du métier selon le taux de silice utilisé dans la composition.

La composition de caoutchouc conforme à l'invention peut également contenir, en complément des agents de couplage, des activateurs de couplage, des agents de recouvrement de la silice ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvreà l'état cru.

La composition de caoutchouc comprend aussi un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, des pigments, des agents de protection tels que cires anti-ozone, anti-ozonants chimiques, anti-oxydants, des agents anti-fatigue.

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Selon un mode de réalisation particulier de l'invention, la composition de caoutchouc conforme à l'invention peut être fabriquée par un procédé, autre objet de l'invention, qui comprend les étapes suivantes :
- au cours d'une première étape dite non productive malaxer l'élastomère diénique, le composé 1,3-dipolaire tel que défini précédemment en malaxant thermo-mécaniquement,
- ajouter ensuite la charge renforçante, le cas échéant les autres ingrédients de la composition de caoutchouc à l'exception du système de réticulation en malaxant thermo-mécaniquement jusqu'à atteindre une température maximale comprise entre 130 et 200°C,
- refroidir l'ensemble à une température inférieure à 100°C,
- incorporer ensuite le système de vulcanisation,
- malaxer le tout jusqu'à une température maximale inférieure à 120°C.

Le temps de contact entre l'élastomère diénique et le composé 1,3-dipolaire qui sont malaxés thermo-mécaniquement est ajusté en fonction des conditions du malaxage thermomécanique, notamment en fonction de la température. Plus la température du malaxage est élevée, plus ce temps de contact est court. Typiquement il est de 1 à 5 minutes pour une température de 100 à 130°C.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique, notamment une bande de roulement pour pneumatique.

La composition de caoutchouc conforme à l'invention peut être soit à l'état cru (avant réticulation ou vulcanisation), soit à l'état cuit (après réticulation ou vulcanisation). Elle est préférentiellement utilisée dans un pneumatique, par exemple comme produit semi-fini.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Analyse RMN :

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde " large bande " BBFO-zgrad 5 mm.

L'expérience RMN ¹H quantitative, utilise une séquence simple impulsion 30° et un délai de répétition de 3 secondes entre chacune des 64 acquisitions. Les échantillons sont solubilisés dans le Diméthylsulfoxide deutéré (DMSO). Ce solvant est également utilisé pour le signal de lock. La calibration est réalisée sur le signal des protons du DMSO deutéré à 2.44ppm par rapport à une référence TMS à 0ppm. Le spectre RMN ¹H couplé aux expériences 2D HSQC ¹H/13C et HMBC ¹H/¹³C permettent la détermination structurale des molécules (cf tableaux d'attributions). Les quantifications molaires sont réalisées à partir du spectre RMN 1D ¹H quantitatif.

La détermination du taux molaire de composé oxyde de nitrile greffé est réalisée par une analyse RMN. Les spectres sont acquis sur un spectromètre 500 MHz BRUKER équipé d'une « CryoSonde BBFO-zgrad-5 mm ». L'expérience RMN ¹H quantitative, utilise une séquence simple impulsion 30° et un délai de répétition de 5 secondes entre chaque acquisition. Les échantillons sont solubilisés dans le chloroforme deutéré (CDCl3) dans le but d'obtenir un signal de « lock ».

Des expériences RMN 2D ont permis de vérifier la nature du motif greffé grâce aux déplacements chimiques des atomes de carbone et de proton.

### Essais de traction :

Ces essais de traction permettent de déterminer les contraintes d'élasticité. Sauf indication différente, ils sont effectués conformément à la norme française NF T 46-002 de septembre 1988. Un traitement des enregistrements de traction permet également de tracer la courbe de module en fonction de l'allongement. On mesure en première élongation le module sécant nominal calculé en se ramenant à la section initiale de l'éprouvette (ou contrainte apparente, en MPa) à 100% d'allongement noté MSA100 et à 300% d'allongement noté MSA300. Toutes ces mesures de traction sont effectuées dans les conditions normales de température (23 ± 2°C) selon la norme NF T 46-002.

Le rapport MSA300/MSA100 est l'indice de renforcement. Plus ce rapport est grand, plus le renforcement de la composition de caoutchouc est fort.

### Propriétés dynamiques :

Les propriétés dynamiques tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont le module complexe de cisaillement dynamique (G^{∗}) à 25% de déformation, le facteur de perte tan(δ) et l'écart de module (ΔG^{∗}) entre les valeurs à 0,1 et 100% de déformation (effet Payne). Pour le cycle retour, on indique la valeur maximale de tan(δ) observée, noté tan(δ)max.

### II.2-Synthèse des composés 1,3-dipolaires :

Les composés 1,3-dipolaires D-1 et D-2, respectivement de formule (III) et (IV) ont été préparés.

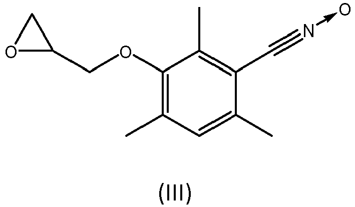

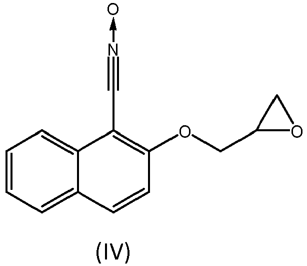

### Synthèse d'un composé cible 1 :

Le composé cible 1 est un précurseur utilisé dans la synthèse du composé 1,3-dipolaire D-1.

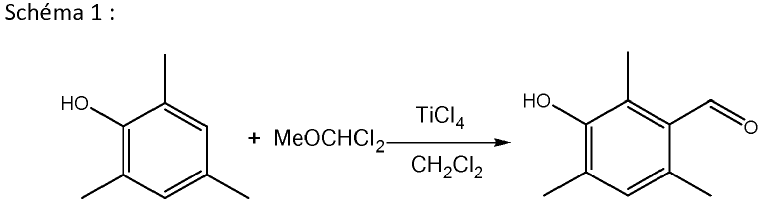

Le composé cible 1 peut être obtenu selon une procédure décrite dans l'article Yakubov, A. P.; Tsyganov, D. V.; Belen'kii, L. I.; Krayushkin, M. M. Bulletin of the Academy of Sciences of the USSR, Division of Chemical Science (English Translation); vol. 40; nb. 7.2; (1991); p. 1427 -1432*;* Izvestiya Akademii Nauk SSSR, Seriya Khimicheskaya; nb. 7; (1991); p. 1609 -1615*.*

### Synthèse du 2,4,6-triméthyl-3-(oxiran-2-ylméthoxy)benzonitrile oxyde (D-1) :

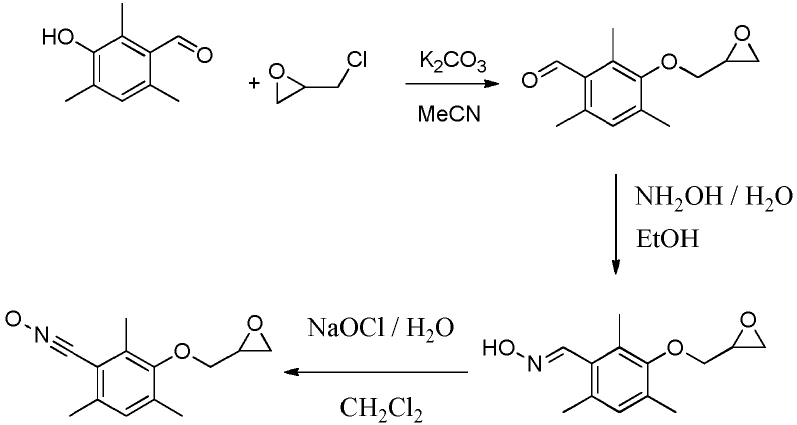

### Synthèse de 2,4,6-triméthyl-3-(oxiran-2-ylméthoxy)benzaldéhyde (cible 2) :

A un mélange de 3-hydroxy-2,4,6-triméthylbenzaldéhyde (40,00 g, 0,244 mol) et d'épichlorhydrine (56,35 g, 0,609 mol) dans l'acétonitrile (100 ml) est ajouté le carbonate de potassium (50,50 g, 0,365 mol). Le milieu réactionnel est agité pendant 3 heures à 60 ºC et ensuite agité pendant 2.5-3 heures à 70 ºC. Après retour à 40-50 °C, le mélange réactionnel est dilué avec un mélange d'eau (250ml) et d'éthylacétate (250 ml), puis maintenu sous agitation pendant 10 minutes. La phase organique est séparée et lavée avec de l'eau (4 fois par 125 ml). Le solvant est évaporé sous pression réduite (T_{bain} 37 ºC, 40 mbar). Une huile rouge (66,43 g) est obtenue.

Le produit secondaire de la réaction, le 3,3'-((2-hydroxypropane-1,3-diyl)bis(oxy))bis(2,4,6-triméthylbenzaldéhyde) est séparé du produit cible 2 par chromatographie sur colonne de silice (éluent : éthylacétate / éther de pétrole = 1 / 4). Après récupération des fractions du produit cible 2, les solvants sont évaporés sous pression réduite (Tbain 36 ºC, 21 mbar). De l'éther de pétrole (120 ml) est ajouté au résidu et la suspension est maintenue sous agitation à -18ºC pendant 2 heures. Le précipité est filtré et lavé sur le filtre avec de l'éther de pétrole (40/60) (3 fois 25 ml) et enfin séché pendant 10-15 heures sous pression atmosphérique à température ambiante. Un solide blanc (40,04 g, rendement massique de 75 %) avec un point de fusion de 52 °C est obtenu. La pureté molaire est supérieure à 99 % (RMN ¹H).

### Tableau d'attribution:

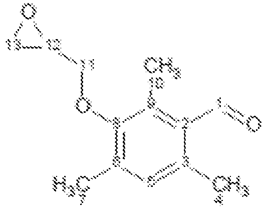

| | δ ¹H (ppm) | δ ¹³C (ppm) |
|---|---|---|
| 1 | 10.37 | 193.3 |
| 2 | / | 131.1 |
| 3 | / | 132.8 |
| 4 | 2.4 | 19.2 |
| 5 | 6.94 | 131.3 |
| 6 | / | 136.3 |
| 7 | 2.2 | 16.1 |
| 8 | / | 153.4 |
| 9 | / | 135.7 |
| 10 | 2.4 | 11.7 |
| 11 | 3.50/4.00 | 73.4 |
| 12 | 3.29 | 49.6 |
| 13 | 2.60/2.76 | 42.9 |

### Solvant DMSO

### Synthèse de 2,4,6-triméthyl-3-(oxiran-2-ylmethoxy)benzaldéhyde oxime (cible 3) :

A une solution de 2,4,6-triméthyl-3-(oxiran-2-ylméthoxy)benzaldéhyde (46,70 g, 0,212 mol) dans l'alcool éthylique (750 ml) est ajoutée à température ambiante une solution d'hydroxylamine (16,81 g, 0,254 mol, 50 % dans l'eau, Aldrich) dans l'alcool éthylique (75 ml). Le milieu réactionnel est agité pendant 3 heures à 23°C (T_{bain}). Après évaporation du solvant (T_{bain} 24°C, 35 mbar), de l'éther de pétrole (40/60) (150 ml) est ajouté. Le précipité est filtré et lavé sur le filtre par l'éther de pétrole (100 ml). Le produit brut est solubilisé dans un mélange d'acétate d'éthyle (650 ml) et d'éther de pétrole (650 ml) à température ambiante et cette solution est filtrée sur une couche de silicagel (Ø9 cm, 2,0 cm de SiO₂).

Les solvants sont évaporés (T_{bain} 22-24°C) et le produit cible 3 est séché sous pression atmosphérique à température ambiante. Un solide blanc (43,81 g, rendement massique de 88 %) avec un point de fusion de 77 °C est obtenu. La pureté molaire est supérieure à 99 % (RMN ¹H)

### Tableau d'attribution :

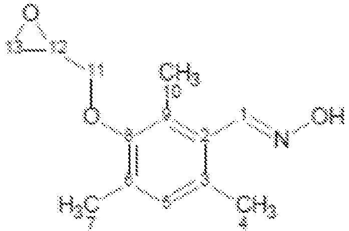

| | δ ¹H (ppm) | δ ¹³C (ppm) |
|---|---|---|
| 1 | 8.2 | 147.3 |
| 2 | / | 129.1 |
| 3 | / | 129.2 |
| 4 | 2.18 | 20.1 |
| 5 | 6.85 | 130.2 |
| 6 | / | 130.3 |
| 7 | 2.15 | 15.7 |
| 8 | / | 153.1 |
| 9 | / | 131.7 |
| 10 | 2.18 | 13.1 |
| 11 | 3.48/3.96 | 73.3 |
| 12 | 3.27 | 49.6 |
| 13 | 2.60/2.76 | 42.8 |

### Solvant DMSO

### Synthèse de 2,4,6-triméthyl-3-(oxiran-2-ylméthoxy)benzonitrile oxyde (D-1) :

A une solution de 2,4,6-triméthyl-3-(oxiran-2-ylméthoxy)benzaldéhyde oxime (17,00 g, 0,072 mol) dans du dichlorométhane (350 ml) refroidie jusqu'à 3°C est ajoutée au goutte à goutte une solution aqueuse de NaOCI dans l'eau (62,9 g Cl actif/L) (126 ml) pendant 10-15 minutes. La température du milieu réactionnel reste comprise entre 3 et 5°C. Le milieu réactionnel est ensuite agité pendant 1 heure à température 3-5°C. La phase aqueuse est séparée et extraite avec du dichlorométhane (25 ml). Les phases organiques réunies sont lavées avec de l'eau (3 fois 75 ml). Le solvant est évaporé à pression réduite (T_{bain} 22°C, 35 mbar). A ce résidu est additionné de l'éther de pétrole (40/60) (90 ml) et la suspension est maintenue sous agitation à température ambiante pendant 10-12 heures. Le précipité est filtré et lavé sur le filtre avec de l'éther de pétrole (3 fois par 30 ml) et enfin séché pendant 10-15 heures sous pression atmosphérique à température ambiante. Un solide blanc (15,12 g, rendement massique de 90 %) avec un point de fusion de 63°C est obtenu. La pureté molaire est supérieure à 99 % (RMN ¹H).

### Tableau d'attribution:

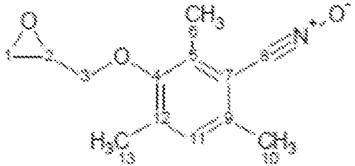

| | δ ¹H (ppm) | δ ¹³C (ppm) |
|---|---|---|
| 1 | 2.59/2.76 | 43.0 |
| 2 | 3.28 | 49.6 |
| 3 | 3.51/4.03 | 73.5 |
| 4 | / | 153.0 |
| 5 | / | 136.3 |
| 6 | 2.27 | 14.3 |
| 7 | / | 111.7 |
| 8 | / | / |
| 9 | / | 134.4 |
| 10 | 2.18 | 15.9 |
| 11 | 7.01 | 129.9 |
| 12 | / | 134.0 |
| 13 | 2.27 | 19.5 |

### Solvant DMSO

### Synthèse du 2-(glycidyloxy)-1-naphtonitrile oxide (D-2) :

Le composé D-2 est synthétisé selon le mode opératoire décrit dans la demande de brevet US 20120046418A1.

### II.3-Préparation des compositions de caoutchouc:

On prépare six compositions de caoutchouc, respectivement ST, S1, S2, NT, N1 et N2. La formulation des compositions figure dans le tableau I. Les compositions S1, S2, N1 et N2 sont des compositions conformes à l'invention, puisqu'elles sont à base d'un élastomère diénique (copolymère de 1,3-butadiène et de styrène à 26% d'unité styrène et à 56% d'unité butadiène-1,2 (vinyle), d'un composé 1,3 dipolaire portant un groupe époxyde et introduit dans la composition à hauteur de 0.5% molaire, d'un système de vulcanisation et d'une silice ou d'un noir de carbone à titre de charge renforçante. Les compositions ST et NT sont des compositions témoin, puisqu'elles ne sont pas à base de composé 1,3-dipolaire portant un groupe époxyde. La composition ST est renforcée d'une silice et est la composition témoin des compositions S1 et S2, également renforcées d'une silice. La composition NT est renforcée d'un noir de carbone et est la composition témoin des compositions N1 et N2, également renforcées d'un noir de carbone. On incorpore les constituants de la composition de caoutchouc selon le procédé conforme à l'invention à la réserve près que pour ST et NT le composé 1,3-dipolaire n'est pas utilisé. On calandre ensuite sous forme de plaques (épaisseur de 2 à 3mm) les compositions de caoutchouc, on les vulcanise et on mesure leurs propriétés. Les résultats figurent dans le tableau II. Les résultats sont indiqués en base 100 par rapport à la composition témoin : la valeur indiquée pour une composition est le rapport entre la valeur mesurée sur la composition et la valeur mesurée sur la composition témoin.

En mélange silice ou en mélange noir de carbone, l'introduction du composé 1,3-dipolaire portant un groupe époxyde dans la composition de caoutchouc permet d'améliorer significativement la dispersion de la charge renforçante dans la composition de caoutchouc, tout en maintenant un bon compromis entre les propriétés de renforcements, d'hystérèse et de rigidité à cuit. En effet, on observe une très forte diminution de la non-linéarité ΔG^{∗} sans diminution de l'indice de renforcement MSA300/MSA100, ce qui traduit une très forte amélioration de la dispersion de la charge renforçante dans la composition de caoutchouc. Ce résultat est obtenu alors que les propriétés de rigidité à cuit et d'hystérèse de la composition de caoutchouc sont quasiment maintenues.

**Tableau I**

| Composition | ST | S1 | S2 | NT | N1 | N2 |
|---|---|---|---|---|---|---|
| SBR | 100 | | | 100 | | |
| SBR + D-1 | | 100 | | | 100 | |
| SBR +D-2 | | | 100 | | | 100 |
| Silice (1) | 60 | 60 | 60 | | | |
| Silane (2) | 4,8 | 4,8 | 4,8 | | | |
| Noir de carbone(3) | | | | 50 | 50 | 50 |
| Antioxydant (3) | 3 | 3 | 3 | 3 | 3 | 3 |
| Paraffine (4) | 1 | 1 | 1 | 1 | 1 | 1 |
| ZnO (5) | 2,7 | 2,7 | 2,7 | 2,7 | 2,7 | 2,7 |
| Acide stéarique | 2,5 | 2,5 | 2,5 | 2,5 | 2,5 | 2,5 |
| CBS (6) | 1,8 | 1,8 | 1,8 | 1,8 | 1,8 | 1,8 |
| Soufre | 1,5 | 1,5 | 1,5 | 1,5 | 1,5 | 1,5 |

| | | | | | | |
|---|---|---|---|---|---|---|
| (1) Silice « 160 MP » commercialisée par Solvay (2) TESPT commercialisé par Evonik sous la référence « SI69» (3) Noir de carbone N234 (4) N-(1,3-diméthylbutyl)-N'-phényl-p-phénylènediamine de la société Flexsys (5) Agent de mise en œuvreParaffine 6266 (6) Oxyde de zinc (7) N-cylohexyl-2-benzothiazol-sulfénamide (« Santocure » de la société Flexsys) | | | | | | |

**Tableau II**

| Composition | ST | S1 | S2 | NT | N1 | N2 |
|---|---|---|---|---|---|---|
| G^{∗} 23°C | 100 | 96 | 101 | 100 | 101 | 100 |
| ΔG^{∗} 23°C | 100 | 43 | 43 | 100 | 70 | 57 |
| Tanδ max 23°C | 100 | 100 | 100 | 100 | 97 | 93 |
| MSA300/MSA100 | 100 | 134 | 127 | 100 | 101 | 105 |

## Revendications

1. Composition de caoutchouc à base d'au moins un élastomère diénique, un composé 1,3-dipolaire comportant un groupe époxyde, une charge renforçante comprenant une silice ou un noir de carbone et un système de vulcanisation.

2. Composition de caoutchouc selon la revendication 1 dans laquelle le groupe époxyde est de formule (I) 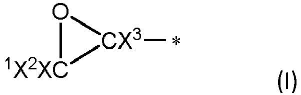 dans laquelle
- ^{∗} représente un rattachement au dipôle,
- X¹, X² et X³, identiques ou différents, représentent un atome d'hydrogène ou un groupe substituant.

3. Composition de caoutchouc selon la revendication 2 dans laquelle le groupe substituant est un alkyle ou un aryle.

4. Composition de caoutchouc selon l'une quelconque des revendications 2 à 3 dans laquelle le X¹, X² et X³ représentent chacun un atome d'hydrogène.

5. Composition de caoutchouc selon l'une quelconque des revendications 1 à 4, dans laquelle le composé 1,3-dipolaire est un oxyde de nitrile.

6. Composition de caoutchouc selon l'une quelconque des revendications 1 à 5, dans laquelle le composé 1,3-dipolaire comprend un noyau benzénique substitué par le dipôle.

7. Composition de caoutchouc selon la revendication 6 dans laquelle le noyau benzénique est substitué en ortho du dipôle.

8. Composition de caoutchouc selon l'une quelconque des revendications 1 à 7, dans laquelle le composé 1,3-dipolaire est un monooxyde de nitrile aromatique.

9. Composition de caoutchouc selon l'une quelconque des revendications 1 à 8, dans laquelle le composé 1,3-dipolaire contient un motif de formule (II) dans laquelle quatre des cinq symboles R1 à R5, identiques ou différents, sont chacun un atome ou un groupe d'atomes, et le cinquième symbole représente une chaîne carbonée permettant le rattachement au groupe époxyde, sachant qu'au moins un des R1 et R5 est différent d'un atome d'hydrogène

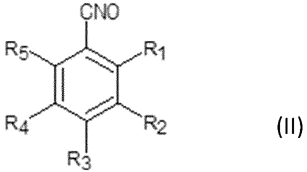

10. Composition de caoutchouc selon la revendication 9 dans laquelle R1, R3 et R5 représentent chacun un groupe hydrocarboné.

11. Composition de caoutchouc selon la revendication 9 dans laquelle R1, R3 et R5 représentent chacun un alkyle.

12. Composition de caoutchouc selon la revendication 9 dans laquelle R1, R3 et R5 représentent un méthyle ou un éthyle.

13. Composition de caoutchouc selon la revendication 9 dans laquelle R4 et R5 forment un cycle aromatique avec les atomes de carbone du noyau benzénique auxquels ils se rattachent.

14. Composition de caoutchouc selon l'une quelconque des revendications 1 à 13 dans laquelle l'élastomère diénique est choisi dans le groupe des élastomères constitué par les homopolymères de 1,3-butadiène, les homopolymères d'isoprène, les copolymères de 1,3-butadiène, les copolymères d'isoprène et leurs mélanges.

15. Pneumatique qui comprend une composition de caoutchouc définie à l'une quelconque des revendications 1 à 14.

## Patentansprüche

1. Kautschukzusammensetzung auf Basis von mindestens einem Dienelastomer, eine 1,3-dipolaren Verbindung mit einer Epoxidgruppe, einem verstärkenden Füllstoff, der eine Kieselsäure oder einen Ruß umfasst, und einem Vernetzungssystem.

2. Kautschukzusammensetzung nach Anspruch 1, wobei die Epoxidgruppe die Formel (I) aufweist: 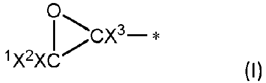 wobei
- * für eine Anbindung an den Dipol steht,
- X¹, X² und X³ gleich oder verschieden sind und für ein Wasserstoffatom oder eine Substituentengruppe stehen.

3. Kautschukzusammensetzung nach Anspruch 2, wobei es sich bei der Substituentengruppe um ein Alkyl oder ein Aryl handelt.

4. Kautschukzusammensetzung nach einem der Ansprüche 2 bis 3, wobei X¹, X² und X³ jeweils für ein Wasserstoffatom stehen.

5. Kautschukzusammensetzung nach einem der Ansprüche 1 bis 4, wobei es sich bei der 1,3-dipolaren Verbindung um ein Nitriloxid handelt.

6. Kautschukzusammensetzung nach einem der Ansprüche 1 bis 5, wobei die 1,3-dipolare Verbindung einen durch den Dipol substituierten Benzolkern umfasst.

7. Kautschukzusammensetzung nach Anspruch 6, wobei der Benzolkern in ortho-Position zum Dipol substituiert ist.

8. Kautschukzusammensetzung nach einem der Ansprüche 1 bis 7, wobei es sich bei der 1,3-dipolaren Verbindung um ein aromatisches Nitrilmonooxid handelt.

9. Kautschukzusammensetzung nach einem der Ansprüche 1 bis 8, wobei die 1,3-dipolare Verbindung eine Einheit der Formel (II) umfasst, wobei vier der fünf Symbole R₁ bis R₅ gleich oder verschieden sind und jeweils für ein Atom oder eine Gruppe von Atomen stehen und das fünfte Symbol für eine die Anbindung an die Epoxidgruppe ermöglichende Kohlenstoffkette steht, mit der Maßgabe, dass mindestens eines von R₁ bis R₅ von einem Wasserstoffatom verschieden ist:

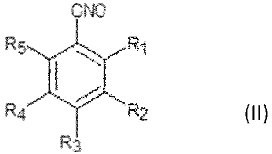

10. Kautschukzusammensetzung nach Anspruch 9, wobei R₁, R₃ und R₅ jeweils für eine Kohlenwasserstoffgruppe stehen.

11. Kautschukzusammensetzung nach Anspruch 9, wobei R₁, R₃ und R₅ jeweils für ein Alkyl stehen.

12. Kautschukzusammensetzung nach Anspruch 9, wobei R₁, R₃ und R₅ jeweils für ein Methyl oder ein Ethyl stehen.

13. Kautschukzusammensetzung nach Anspruch 9, wobei R₄ und R₅ mit den Kohlenstoffatomen des Benzolkerns, an die sie gebunden sind, einen aromatischen Ring bilden.

14. Kautschukzusammensetzung nach einem der Ansprüche 1 bis 13, wobei das Dienelastomer aus der Gruppe von Elastomeren bestehend aus 1,3-Butadien-Homopolymeren, Isopren-Homopolymeren, 1,3-Butadien-Copolymeren, Isopren-Copolymeren und Mischungen davon ausgewählt ist.

15. Reifen, der eine Kautschukzusammensetzung gemäß einem der Ansprüche 1 bis 14 umfasst.

## Claims

1. Rubber composition based on at least one diene elastomer, a 1,3-dipolar compound comprising an epoxide group, a reinforcing filler comprising a silica or a carbon black, and a vulcanization system.

2. Rubber composition according to Claim 1, in which the epoxide group is of formula (I): 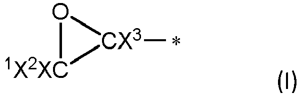 in which:
- ^{∗} represents a connection to the dipole,
- X¹, X² and X³, which are identical or different, represent a hydrogen atom or a substituent group.

3. Rubber composition according to Claim 2, in which the substituent group is an alkyl or an aryl.

4. Rubber composition according to any one of Claims 2 to 3, in which X¹, X² and X³ each represent a hydrogen atom.

5. Rubber composition according to any one of Claims 1 to 4, in which the 1,3-dipolar compound is a nitrile oxide.

6. Rubber composition according to any one of Claims 1 to 5, in which the 1,3-dipolar compound comprises a benzene nucleus substituted by the dipole.

7. Rubber composition according to Claim 6, in which the benzene nucleus is substituted in the position ortho to the dipole.

8. Rubber composition according to any one of Claims 1 to 7, in which the 1,3-dipolar compound is an aromatic nitrile monooxide.

9. Rubber composition according to any one of Claims 1 to 8, in which the 1,3-dipolar compound contains a unit of formula (II) in which four of the five symbols R₁ to R₅, which are identical or different, are each an atom or a group of atoms, and the fifth symbol represents a carbon chain which makes possible the connection to the epoxide group, it being known that at least one of R₁ and R₅ is other than a hydrogen atom

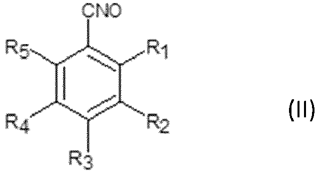

10. Rubber composition according to Claim 9, in which R₁, R₃ and R₅ each represent a hydrocarbon group, preferably an alkyl group, more preferentially a methyl or ethyl group.

11. Rubber composition according to Claim 9, in which R₁, R₃ and R₅ each represent an alkyl group.

12. Rubber composition according to Claim 9, in which R₁, R₃ and R₅ represent a methyl or ethyl group.

13. Rubber composition according to Claim 9, in which R₄ and R₅ form an aromatic ring with the carbon atoms of the benzene nucleus to which they are attached.

14. Rubber composition according to any one of Claims 1 to 13, in which the diene elastomer is selected from the group of elastomers consisting of 1,3-butadiene homopolymers, isoprene homopolymers, 1,3-butadiene copolymers, isoprene copolymers and their mixtures.

15. Tyre which comprises a rubber composition defined in any one of Claims 1 to 14.
